**Europäisches Patentamt**

**European Patent Office**

**Office européen des brevets**

(19)

(11) Veröffentlichungsnummer: **0 307 691 B1**

(12) **EUROPÄISCHE PATENTSCHRIFT**

(45) Veröffentlichungstag der Patentschrift:
26.06.91 Patentblatt 91/26

(51) Int. Cl.⁵: **B23Q 3/157**

(21) Anmeldenummer: **88113953.9**

(22) Anmeldetag: **26.08.88**

(54) **Werkzeugwechsler für Universal-Fräs- und Bohrmaschinen.**

(30) Priorität: **17.09.87 DE 3731280**

(43) Veröffentlichungstag der Anmeldung:
**22.03.89 Patentblatt 89/12**

(45) Bekanntmachung des Hinweises auf die
Patenterteilung:
**26.06.91 Patentblatt 91/26**

(84) Benannte Vertragsstaaten:
**CH DE FR GB IT LI**

(56) Entgegenhaltungen:
**EP-A- 0 186 726**
**EP-A- 0 224 714**

(56) Entgegenhaltungen:
**DE-A- 2 710 314**
**DE-U- 8 628 623**
**FR-A- 1 421 036**
**GB-A- 1 455 787**

(73) Patentinhaber: **MAHO Aktiengesellschaft**
**Postfach 1280 Tiroler Strasse 85**
**W-8962 Pfronten (DE)**

(72) Erfinder: **Hoppe, Gerd**
**Rohrbergstrasse 5**
**W-3501 Habichtswald (DE)**

(74) Vertreter: **Patentanwälte Beetz sen. - Beetz**
**jun. Timpe - Siegfried - Schmitt-Fumian**
**Steinsdorfstrasse 10**
**W-8000 München 22 (DE)**

EP 0 307 691 B1

## Beschreibung

Die Erfindung betrifft eine programmgesteuerte Fräs- und Bohrmaschine mit vertikalem Fräskopf mit vertikal bewegbarer Tischkonsole und mit einem seitlich hinter dem Fräskopf horizontal angeordneten Werkzeugmagazin und mit einem Werkzeugwechsler, der eine vertikale Säule und einen daran gelagerten, horizontal schwenkbaren Tragarm aufweist, an dessen freiem Ende eine Greiferzange beweglich gelagert ist, welche durch eine Schwenkbewegung des Tragarms die ausgewählten Werkzeuge aus der Übergabeposition des Werkzeugmagazins zur Arbeitsspindel – und umgekehrt – überführt.

Werkzeugwechsler zum automatisierten Wechseln der Werkzeuge sind zusammen mit entsprechenden Werkzeugmagazinen wesentliche Bauteile moderner programmgesteuerter Werkzeugmaschinen, weil sie eine zügige komplexe Bearbeitung auch komplizierterer Werkstücke mit verschiedenartigen Werkzeugen ermöglichen. Die Wechselvorgänge selbst sowie die dabei vom Wechsler bzw. vom Werkzeugmagazin durchzuführenden Bewegungen werden von der Steuereinheit der Werkzeugmaschine entsprechend dem eingegebenen Programm gesteuert. Aufgrund ihrer herausragenden Bedeutung für die Bearbeitungsleistung in der jeweiligen Werkzeugmaschine sind in den letzten Jahren eine Vielzahl verschiedener Typen und Ausführungen von Werkzeugwechslern entwickelt worden, die in mehr oder weniger starkem Maße an die Konstruktion und Arbeitsweise der zugehörigen Werkzeugmaschine angepaßt sind. Allen bekannten Wechslerausführungen ist die Forderung gemeinsam, die einzelnen Wechselvorgänge innerhalb kürzester Zeiten durchzuführen, um dadurch die notwendigen Totzeiten der Maschine klein zu halten. Erreicht werden diese Forderungen in der Regel nur durch einen entsprechend hohen technischen Aufwand – bedingt durch die Dimensionierung der Antriebe und der bewegten Teile sowie der Steuerungen – der bei z.B. größeren Bearbeitungszentren auch kostenmäßig gerechtfertigt ist, bei kleineren Werkzeugmaschinen jedoch in verschiedenen Fällen von den Abnehmern und Benutzern nicht akzeptiert wird.

So ist beispielsweise aus dem DE-GM 8628623.4 ein Werkzeugwechsler für programmgesteuerte Universal-Fräs- und Bohrmaschinen bekannt, der die Vertikalspindel ebenso wie die Horizontalspindel bedient. In einer Seitenwand des Maschinenständers ist ein horizontaler Querholm starr befestigt, auf dem ein Tragarm axial verschiebbar und in einem vorgegebenen Winkelbereich motorisch schwenkbar gelagert ist. An diesem parallel zur Ständerwand verlaufenden Tragarm ist ein nach rückwärts abgekröpfter Träger drehfest und axial verschiebbar montiert, der einen um seine Längsachse verdrehbaren Querarm mit einer senkrecht zu dessen Längsachse angeordneter Greiferzange trägt. Bei diesem bekannten Werkzeugwechsler führen der Tragarm, der an seinem Ende montierte Träger, der Querarm und die Greiferzange bei jedem Wechselvorgang unterschiedliche Bewegungen aus, die von jeweils gesonderten Antrieben erzeugt werden. Die für möglichst schnelle und genaue Bewegungen ausgelegten Arme sowie die entsprechend dimensionierten Antriebe incl. ihrer hydraulischen und elektrischen Energiezuführungen erfordern einen erheblichen technischen Aufwand.

Aufgabe der Erfindung ist es, einen Werkzeugwechsler für programmgesteuerte Fräs- und Bohrmaschinen mit einer Konsole für den Werkstücktisch und mit einem vertikalen Fräskopf zu schaffen, der insbesondere für den Einsatz an kleineren Werkzeugmaschinen kompakt und konstruktiv einfach ausgebildet ist.

Diese Aufgabe wird erfindungsgemäß dadurch gelöst, daß bei einer programmgesteuerten Fräs- und Bohrmaschine gemäß dem Oberbegriff des Anspruchs 1 die Säule seitlich an der Trischkonsole montiert ist und daß die Greiferzange bei der Schwenkbewegung des Tragarms eine davon abgeleitete gegensinnige Schwenkbewegung ausführt.

Bei diesem erfindungsgemäß ausgebildeten Werkzeugwechsler existieren lediglich zwei Bauteile, die gesonderte Schwenkbewegungen ausführen, wobei durch die Anordnung der Säule auf der vertikal verfahrbaren Konsole des Werkstücktisches Bewegungen des gesamten Werkzeugwechslers für den Ein- und Ausbau der einzelnen Werkzeuge in die Vertikalspindel bzw. in das Werkzeugmagazin möglich sind, ohne daß hierzu gesonderte Antriebsmittel benötigt werden.

Eine weitere konstruktive Vereinfachung des Werkzeugwechslers und der Steuerung seiner Bewegungen zeichnet sich dadurch aus, daß die Schwenkbewegung der Greiferzange um die vertikale Achse von der Schwenkbewegung der als Tragarm ausgebildeten Halterung abgeleitet ist. Diese Ableitung der horizontalen Greiferzangen-Bewegung kann durch geeignete Getriebe, insbesondere Ketten, Zahnriemen, Zahn-bzw. Kegelradpaare mit Verbindungswellen, Zahnstangen o.dgl. erfolgen. Bei Verwendung von Ketten oder Zahnriemen wird dieses Getriebeelement mit seinen beiden Enden an einem mit der Säule fest verbundenen Bauteil festgelegt und innerhalb des Tragarmes um ein Zahnrad geführt, das an der vertikalen Antriebswelle der Greiferzange befestigt ist. Eine von einem hydraulischen oder pneumatischen Stellzylinder oder auch von einer Zahnstange erzeugte Schwenkbewegung des Tragarms um die Mittelachse der vertikalen Säule bewirkt über die Kette oder den Zahnriemen eine entsprechende Verdrehung des Zahnrades und damit der Greiferzange um einen vorbestimmten Winkel. Die Längen des Tragarms und der Greiferzange sind so aufeinander abgestimmt, daß die Greiferzange an Ende ihrer jeweiligen Schwenkbewegung zumindest angenähert radial auf die

2

EP 0 307 691 B1

vertikale Achse des Fräskopfes bzw. der in der Werkzeugwechselposition befindlichen Werkzeugaufnahme des Werkzeugmagazins vorgeschoben wird.

Gemäß einer weiteren zweckmäßigen Ausgestaltung der Erfindung ist die horizontale Greiferzange mit ihrer vertikalen Welle in einem koaxialen Ansatz am freien Ende des Tragarms gelagert, so daß sie ohne Kollisionsgefahr eine gegensinnige Schwenkbewegung zu der des Tragarms ausführen kann.

Der wesentliche Vorteil des erfindungsgemäßen Werkzeugwechslers liegt in seiner einfachen konstruktiven Ausgestaltung und in der geringen Anzahl an bewegten Einzelteilen. Es ist nur ein einziger ortsfester Stellantrieb notwendig, der an oder auch in der Säule montiert sein kann und dessen Energiezufuhr keinerlei Probleme bereitet.

Im folgenden wird ein Ausführungsbeispiel der Erfindung anhand der Zeichnung im einzelnen beschrieben. Es zeigen :

Fig. 1 :  schematisch einen Werkzeugwechsler mit den Bewegungsbahnen seines Schwenkarms und der Greiferzange ;

Fig. 2 :  den Werkzeugwechsler in Seitenansicht mit teilgeschnitten dargestelltem Tragarm ;

Fig. 3, 4 :  den Werkzeugwechsler in perspektivischer Ansicht beim Einwechseln eines Werkzeuges in den vertikalen Fräskopf und in ein horizontal angeordnetes Kettenmagazin.

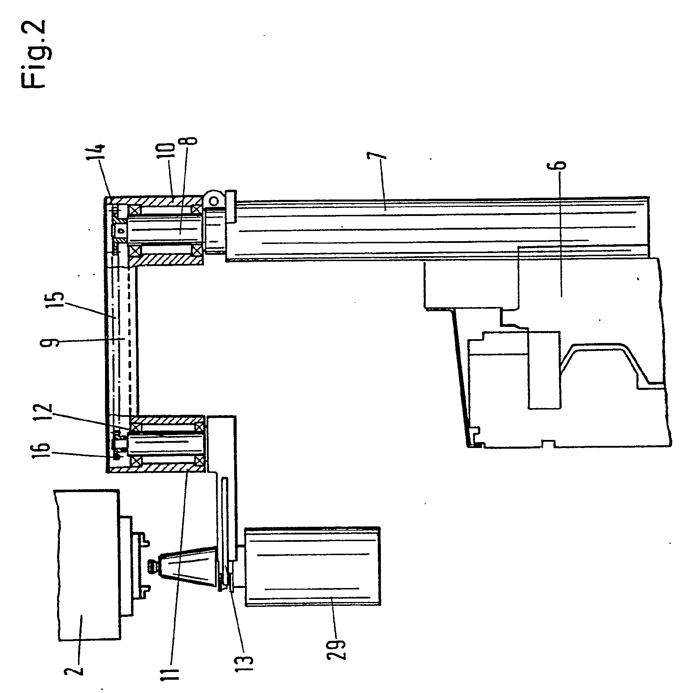

Der dargestellte Werkzeugwechsler ist für eine Fräs- und Bohrmaschine konzipiert, deren horizontal verschiebbarer Spindelstock 1 an seiner Stirnseite einen vertikalen Fräskopf 2 mit einer darin gelagerten drehangetriebenen Arbeitsspindel 3 trägt. An stirnseitigen Senkrecht-Führungen 4 des Maschinenständers 5 ist eine Konsole 6 motorisch verschiebbar geführt, die an ihrer einen Seite eine vertikal nach oben gerichtete Säule 7 trägt. Bei dem dargestellten Ausführungsbeispiel ist – wie in Fig. 2 dargestellt – auf einem zentralen Zapfen 8 der Säule 7 ein horizontaler Tragarm 9 mittels eines hohlzylindrischen Lageransatzes 10 gelagert. Dieser Tragarm 9 endet in einem ebenfalls vertikalen hohlzylindrischen Lageransatz 11, in dem zentral der Wellenzapfen 12 einer horizontalen Greiferzange 13 gelagert ist. Auf das obere verjüngte Ende des mit der Säule 7 fest verbundenen Lagerzapfens 8 ist ein Kettenrad 14 drehfest aufgekeilt, um welches die Endloskette 15 geführt wird. Die Kette 15 läuft über ein Zahnrad 16, das auf dem verjüngten Endabschnitt des Wellenzapfens 12 drehfest aufgekeilt ist.

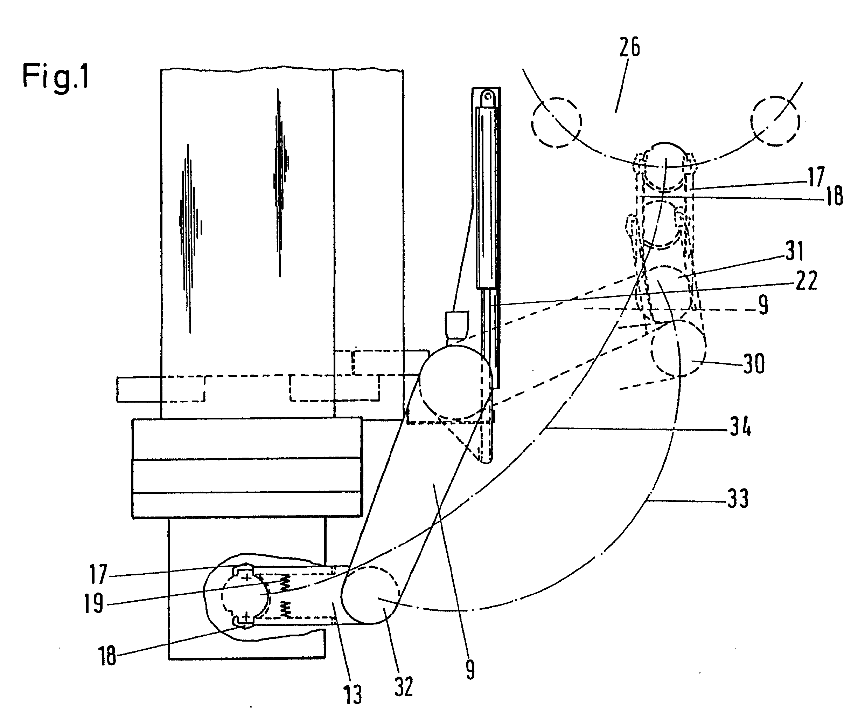

Wie aus Fig. 1 ersichtlich enthält die Greiferzange 13 zwei seitlich auslenkbare Greifer 17, 18, die von einer in der Greiferzange 13 quer eingebauten Feder 19 unter einer Vorspannung gehalten werden und an ihren Greiforganen Schrägflächen aufweisen, die beim Anfahren des jeweiligen Werkzeugkegels eine Aufspreizung gegen die Zugkraft der Feder 19 bewirken.

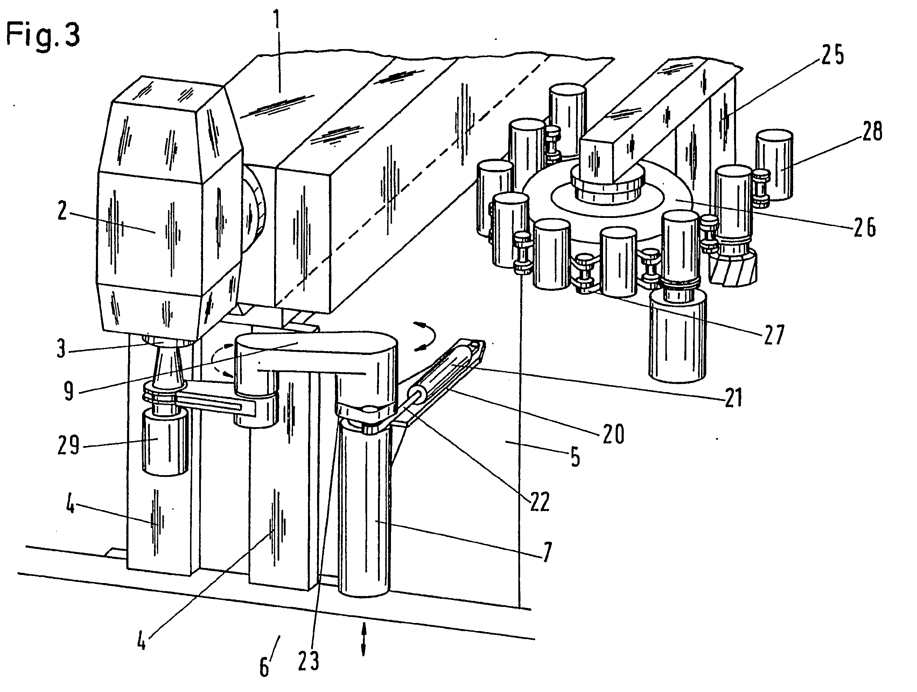

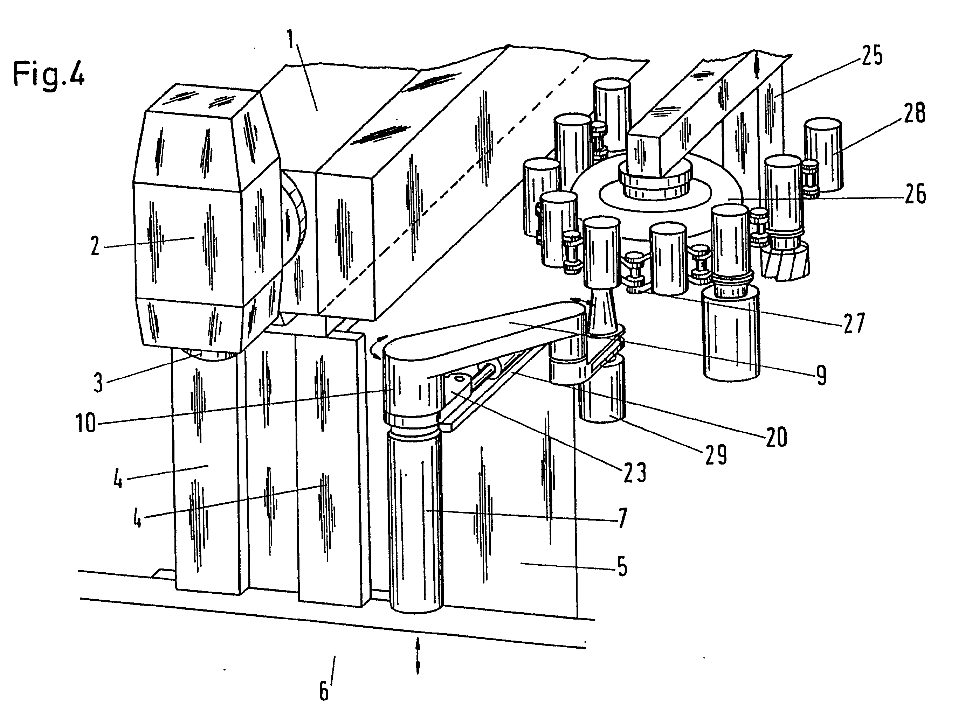

Wie in den Fig. 1, 3 und 4 gezeigt, ist an der Säule 7 eine horizontale Konsole 20 fest montiert, auf welcher ein Stellzylinder 21 mit seinem hinteren Ende angelenkt ist, dessen Kolbenstange 22 an einem radialen Ansatz 23 gelenkig angreift. Dieser radiale Ansatz 23 ist mit dem Lageransatz 10 des Tragarms 9 drehfest verbunden.

Neben dem Spindelstock ist horizontal ein Werkzeugmagazin 25 angeordnet, dessen um ein vorderes Kettenrad 26 geführte Kette 27 hohlzylindrische Aufnahmen 28 trägt, in die die Werkzeuge 29 mit ihren standardisierten Kegeln vertikal von unten in eine Klemmhalterung eingeschoben werden.

Im folgenden werden Wechselvorgänge anhand der Zeichnung beschrieben.

Für jeden Wechselvorgang wird die die Säure 7 tragende Konsole 6 des – nicht dargestellten – Werkstücktischs in eine Wechselposition verfahren, in welcher die Schwenkbewegungen der Wechslerteile nicht mit anderen Bauteilen kollidieren können. In diesem Zustand befindet sich der Tragarm 9 in der in Fig. 1 angedeuteten Ruheposition 30. Zum Beschicken der noch leeren Arbeitsspindel 3 wird der Tragarm 9 durch eine vorbestimmte Einziehbewegung der Kolbenstange 22 in die Position 31 verschwenkt, in welcher die beiden Greifer 17, 18 auf die Mittelachse des in seiner vorderen Wechselposition des Werkzeugmagazins 25 befindlichen Werkzeuges 29 zentriert sind und den Werkzeugkegel des betreffenden Werkzeugs 29 seitlich umgreifen. Durch eine Vertikalbewegung der Konsole 6 nach unten wird das Werkzeug 29 mit seinem Kegel aus der hohlzylindrischen Schutzhülse 28 des Werkzeugmagazins herausgezogen. Sobald der Werkzeugkegel vollständig von der Schutzhülse 28 freigekommen ist, erfolgt eine erneute Schwenkbewegung des Tragarms 9 in die Position 32 in Fig. 1, wobei sich die Achse des Wellenzapfens 12 auf dem Kreisbogen 33 bewegt. Diese Schwenkbewegung des Tragarms 9 wird von dem Kettentriebe 14, 15, 16 in eine gegenläufige Schwenkbewegung der Greiferzange 13 umgesetzt, wobei sich das Werkzeug 29 mit seiner vertikalen Achse auf der bogenförmigen Bahn 34 bewegt. Die Längen des Tragarms 9 und der Greiferzange 13 sowie die Verhältnisse des Kettentriebs sind so gewählt und aufeinander abgestimmt, daß die beiden Greifer 17, 18 das Werkzeug 29 radial in die Achse der Arbeitsspindel 3 heranfahren. Durch eine Vertikalbewegung des Supports 6 nach oben wird das Werkzeug 29 durch Einspannen seines Kegels in die Arbeitsspindel eingespannt. Daraufhin kehrt der Tragarm 9 in seine Ruheposition 30 zurück, wobei die beiden Greifer 17, 18 mit Hilfe von Schrägflächen gespreizt werden und dadurch vom Werkzeugkegel frei kommen.

Der Ausbau eines "alten" Werkzeuges aus der Arbeitsspindel, die Ablage dieses Werkzeuges in einem freien Platz des Werkzeugmagazins sowie das Einsetzen eines neuen Werkzeuges aus dem Magazin in die Arbeitsspindel vollziehen sich in entsprechenden Weise.

Die Erfindung ist nicht auf das dargestellte Ausführungsbeispiel beschränkt. So kann beispielsweise die Säule 7 drehbar in der Konsole gelagert und drehfest mit dem Tragarm 9 verbunden sein, was eine verdeckte Anordnung des Stellantriebs 21, 22 in der Konsole ermöglicht. Bei dieser Ausführung ist jedoch für die Ableitung der Schwenkbewegung der Greiferzange 13 von der Schwenkbewegung des Tragarmes 9 ein anderes Übertragungsmittel erforderlich. Ferner können statt des Stellzylinders 21, 22 auch andere Antriebsaggregate, wie elektrische oder hydraulische Motoren, verwendet werden.

## Ansprüche

1. Programmgesteuerte Fräs- und Bohrmaschine mit vertikalem Fräskopf (2) mit vertikal bewegbarer Tischkonsole (6) und mit einem seitlich hinter dem Fräskopf (2) horizontal angeordneten Werkzeugmagazin (25) und mit einem Werkzeugwechsler, der eine vertikale Säule (7) und einen daran gelagerten, horizontal schwenkbaren Tragarm (9) aufweist, an dessen freiem Ende eine Greiferzange (13) beweglich gelagert ist, welche durch einen Schwenkbewegung des Tragarms (9) die ausgewählten Werkzeuge aus der Übergabeposition des Werkzeugmagazins (25) zur Arbeitsspindel (3) – und umgekehrt – überführt, dadurch gekennzeichnet,

daß die Säule (7) seitlich an der Tischkonsole (6) montiert ist und

daß die Greiferzange (13) bei der Schwenkbewegung des Tragarms (9) eine davon abgeleitete gegensinnige Schwenkbewegung ausführt.

2. Fräs- und Bohrmaschine nach Anspruch 1, dadurch gekennzeichnet, daß die gegensinnige Schwenkbewegung der Greiferzange (13) von der Schwenkbewegung des Tragarms mit Hilfe eines Zahnriemen- bzw. Kettentriebs (14, 15, 16) abgeleitet ist.

## Claims

1. A program-controlled milling and boring machine with a vertical milling head (2) with a vertically movable table bracket (6) and with a horizontal tool magazine (25) disposed laterally behind the milling head (2), and with a tool changer comprising a vertical column (7) and a horizontally pivotable support arm (9) mounted thereon, a gripper (13) being movably mounted at the fee end of said arm (9), which gripper, by a pivoting movement of the support arm (9), transfers the selected tools from the transfer position of the tool magazine (25) to the work spindle (3), and vice versa, characterised in that

the column (7) is mounted laterally on the table bracket (6) and

in that the gripper (13), during the pivoting movement of the support arm (9), performs a contra-directional pivoting movement derived therefrom.

2. A milling and boring machine according to claim 1, characterised in that the contra-directional pivoting movement of the gripper (13) is derived from the pivoting movement of the support arm by means of a toothed belt or chain drive (14, 15, 16).

## Revendications

1. Fraiseuse-aléseuse commandée par programme et comportant une tête de fraisage verticale (2), une console de table (6) pouvant être déplacée verticalement et un magasin d'outils (25) disposé à l'horizontale, latéralement derrière la tête de fraisage (2), ainsi qu'un changeur d'outil qui comprend une colonne verticale (7) et, monté sur celle-ci, un bras porteur (9) susceptible de pivoter horizontalement et à l'extrémité libre duquel est montée de manière mobile une pince de préhension (13) qui, par un mouvement de pivotement du bras porteur (9), transfère les outils sélectionnés, de la position de transfert du magasin d'outils (25) à la broche de travail (3) et inversement, caractérisée en ce que

la colonne (7) est montée latéralement sur la console de table (6) et

en ce que la pince de préhension (13) effectue lors du mouvement de pivotement du bras porteur (9), un mouvement de pivotement dérivé du précédent et de sens contraire.

2. Fraiseuse-aléseuse selon la revendication 1, caractérisée en ce que le mouvement de pivotement de sens contraire de la pince de préhension (13) est dérivé du mouvement de pivotement du bras porteur (9) à l'aide d'une transmission à courroie crantée ou à chaîne (14, 15, 16).

Fig.1

EP 0 307 691 B1

Fig.2

EP 0 307 691 B1

Fig.3

Fig.4